# EUROPÄISCHE PATENTSCHRIFT

(11) **EP 2 824 242 B1**
(45) Veröffentlichungstag und Bekanntmachung des Hinweises auf die Patenterteilung: **22.02.2017**
(21) Anmeldenummer: 14001944.9
(22) Anmeldetag: 05.06.2014
(51) Int. Cl.: E01H 10/00, E01C 19/20, B65G 15/42

(54) **Winterdienst-Streugerät**
Spreading apparatus for winter service
Appareil d'épandage pour service d'hiver

(30) Priorität: 05.06.2013 DE 102013009388
(43) Veröffentlichungstag der Anmeldung: 14.01.2015
(73) Patentinhaber: Aebi Schmidt Nederland BV, 7451 PJ Holten (NL)
(72) Erfinder: Lugtenberg, Felix, 8101 AN Raalte (NL)
(74) Vertreter: Grättinger Möhring von Poschinger Patentanwälte Partnerschaft

(56) Entgegenhaltungen:
- EP-A1- 0 239 175
- DE-B- 1 065 772
- US-B1- 7 124 879

## Beschreibung

Die vorliegende Erfindung betrifft ein Winterdienst-Streugerät zum Ausbringen von salzhaltigem Streustoff auf Verkehrsflächen, umfassend einen Streustoffvorratsbehälter mit mindestens einer bodenseitig angeordneten, ein umlaufendes Förderband umfassenden Fördereinrichtung, mittels derer Streustoff einer Ausbringeinheit zuführbar ist, wobei das Förderband an seiner nach Außen weisenden Oberfläche mit Mitnehmern bestückt ist, welche von dem flachen Bandkörper rippenförmig vorspringen und sich in Förderrichtung öffnen.

Dem Ausbringen von Streustoff auf Verkehrsflächen dienende Winterdienst-Streugeräte sind in verschiedenen Bauweisen bekannt, insbesondere als Aufbau-Streugeräte, als Aufsatz-Streugeräte und als Anhänger-Streugeräte. Jeweils ist dabei dem Streustoffvorratsbehälter bodenseitig mindestens ein Förderaggregat zugeordnet, mittels dessen der Streustoff einer im Allgemeinen heckseitig an dem Streugeräte angeordneten Ausbringeinheit, welche typischerweise mindestens einen rotierend angetriebenen Streuteller umfasst, zuführbar ist.

In der Praxis kommen dabei zwei unterschiedliche Arten von Förderaggregaten zum Einsatz, nämlich einerseits Förderschnecken und andererseits Förderbänder (vgl. z.B: DE 2830056 C2, DE 10328913 B3, DE 29907419 U1 und DE 19838979 C1 sowie Firmenbroschüre aus 1987 "Streumaschinen - Silo-Streuautomat mit Bandfördersystem und Radantrieb" der Ing. Alfred Schmidt GmbH, St. Blasien). Förderschnecken haben dabei den Vorteil, dass sie vergleichsweise robust sind. Allerdings lässt sich mit ihnen die geförderte, der Ausbringeinheit zugeführte Streustoffmenge nicht so exakt dosieren, wie dies mit Förderbändern der Fall ist. Mit anderen Worten: Förderbänder haben gegenüber Förderschnecken den Vorteil, dass sich mit ihnen die Menge des der Ausbringeinheit zugeführten Streustoffes relativ exakt dosieren lässt. Dies ist eine wichtige Voraussetzung für eine bedarfsgerechte, genau auf den tatsächlichen Bedarf abgestimmte Ausbringung des Streustoffs, wie sie unter ökologischen sowie unter wirtschaftlichen Gesichtspunkten angestrebt wird.

Ein gattungsgemäßes Winterdienst-Streugerät mit einer als Förderband ausgeführten Fördereinrichtung, welches sich durch die eingangs angegebenen Merkmale gemäß dem Oberbegriff des Anspruchs 1 auszeichnet, ist aus der EP 239 175 A1 bekannt. Dabei weisen die sich in Förderrichtung etwa V-förmig öffnenden Mitnehmer ein flaches, etwa rechteckiges Profil auf.

Die vorliegende Erfindung hat sich zur Aufgabe gemacht, ein Winderdienst-Streugerät der eingangs angegebenen Art, welches sich aufgrund des Einsatzes einer ein umlaufendes Förderband umfassenden Fördereinrichtung bereits für eine vergleichsweise gute und genaue Dosierung des der Ausbringeinheit zugeführten Streustoffes eignet, noch weiter dahingehend zu verbessern, dass eine noch genauere Dosierung des auf die Verkehrsfläche ausgebrachten Streustoffes möglich ist.

Gelöst wird diese Aufgabenstellung gemäß der vorliegenden Erfindung dadurch, dass die Mitnehmer des Förderbandes, welche sich in Förderrichtung öffnen, jeweils zumindest auf einem überwiegenden Anteil ihrer Erstreckung im Bereich des Übergangs zum Bandkörper mit einem Übergangsradius ausgeführt sind, wobei die Frontseite der Mitnehmer anschließend an den Übergangsradius mit dem Bandkörper einen Winkel zwischen 110° und 140° einschließt und der Übergangsradius maximal 50% der Höhe des betreffenden Mitnehmers beträgt, wobei weiterhin die Mitnehmer rückwärtig, d.h. an einer bezogen auf die Förderrichtung hinteren Flanke mit dem Bandkörper einen Winkel zwischen 150° und 170° einschließen.

In Anwendung der vorliegenden Erfindung, d.h. bei erfindungsgemäßer Gestaltung des Förderbandes und namentlich der Mitnehmer desselben, ergibt sich bei Verwendung üblicher auftauender, salzhaltiger Streustoffe ein Optimum hinsichtlich der Dosierbarkeit. Denn wesentliche nachteilige Einflüsse, welche die Genauigkeit der Dosierung beeinträchtigen, werden in Anwendung der vorliegenden Erfindung - zumindest weitestgehend - unterbunden. So ist die erfindungsgemäße Gestaltung des Förderbandes günstig im Hinblick auf selbstreinigende Effekte, d.h. ein Unterbinden von die Dosiergenauigkeit beeinträchtigenden Anhaftungen von Streustoff an dem Förderband. Namentlich erschwert die erfindungsgemäße Gestaltung des Förderbandes, dass sich frontseitig an den Mitnehmern und insbesondere im Bereich des Übergangs vom Bandkörper zu den Mitnehmern Verkrustungen bzw. sonstige Ablagerungen des Streustoffs festsetzen, was bei bekannten Winterdienst-Streugeräten der gattungsgemäßen Art - insbesondere bei bestimmten Witterungsverhältnissen - durchaus zu beobachten ist und zu Fehldosierungen führen kann, weil die betreffenden Streustoffablagerungen nicht vom Förderband auf die Ausbringeinheit abgeworfen werden, sondern vielmehr wiederholt mit dem Förderband umlaufen. Insoweit spielt eine Rolle, dass salzhaltiger Streustoff aufgrund seiner hygroskopischen Eigenschaften dazu neigt, an dem Bandkörper namentlich im Bereich des Übergangs zu den Mitnehmern anhaftende Ablagerungen zu bilden, wozu die erheblichen Druck- und Scherkräfte beitragen, die auf den Streustoff namentlich dann wirken, wenn er unter Einwirkung der Mitnehmer unter einem Dosierschieber hindurch gefördert (geschoben) wird. Auf der anderen Seite trägt die Gestaltung des Förderbands einem zweiten für eine exakte Dosierung des Streustoffes wesentlichen Phänomen Rechnung, nämlich dem sogenannten Schlupf. Als solchen bezeichnet man, dass - unter der Einwirkung eines oberhalb des Förderbandes angeordneten Dosierschiebers - von dem Förderband in der Praxis weniger Streustoff mitgenommen wird als konstruktiv ausgelegt, weil sich Streustoff gewissermaßen zwischen den Mitnehmern und dem Dosierschieber hindurchzwängt. Ein solcher Schlupf wird in Anwendung der vorliegenden Erfindung minimiert, ohne dass das Risiko der Bildung von an dem Förderband anhaftenden Ablagerungen erhöht wurde. Im Hinblick auf die beiden vorstehend dargelegten Phänomene stellt die vorliegende Erfindung, mit anderen Worten, insoweit eine Optimierung bereit, indem sie für herkömmlichen salzhaltigen Streustoff (mit üblicher Korngröße und Struktur) die Bildung von fest an dem Förderband anhaftenden Verkrustungen stark einschränkt und selbstreinigende Effekte begünstigt, ohne dass dies zu einem unzuträglich hohen Schlupf führen würde. Insbesondere die Gestaltung der Mitnehmer im Bereich ihrer rückwärtigen Flanke gewährleistet zudem eine hinreichende Steifigkeit der Mitnehmer, damit sie starken Scherkräften Stand halten, wobei zugleich eine gewisse Nachgiebigkeit besteht, welche das Ablösen von möglicherweise entstehenden Anhaftungen begünstigt.

Gemäß einer ersten bevorzugten Weiterbildung der vorliegenden Erfindung ist der Bereich des Übergangs vom Bandkörper zur frontseitigen Flanke der Mitnehmer mit einem Radius von mindestens 10 % der Höhe des betreffenden Mitnehmers ausgeführt. Für (gegenwärtig) üblichen salzhaltigen Streustoff erweist sich ein Übergangsradius zwischen 1 mm und 3 mm als besonders vorteilhaft, und zwar bei einer Höhe der Mitnehmer von etwa 5 (bis 6) mm. In diesem Sinne - wie auch im Sinne des Anspruchs 1 - ist dabei als "Radius" ein mittlerer Radius des betreffenden Übergangsbereichs, der ersichtlich nicht einem mathematisch exakten Kreisbogen entsprechen muss, anzusehen.

Die sich gemäß der Erfindung in Förderrichtung öffnenden Mitnehmer können - in ihrer Draufsicht auf das Förderband - unterschiedlich gestaltet sein.

Geeignete sich in Förderrichtung öffnende Gestaltungen sind beispielsweise eine - zumindest im Wesentlichen - V-Form, C-Form, U-Form und dergleichen, wobei bei einer U- und C-Form die Basis mehr oder weniger stark gekrümmt sein kann, die Schenkel mehr oder weniger ausgeprägt in Förderrichtung divergieren können und die Übergänge von der Basis in die Schenkel eher bogenförmig oder eher schafkantig ausgeführt sein können. Günstig (allerdings nicht zwingend) ist, wenn sich die Mitnehmer in Förderrichtung öffnend erweitern, d.h. nicht über ihre gesamte Erstreckung in Förderrichtung die selbe Breite quer zu dieser aufweisen. Gemäß einer besonders vorteilhaften Weiterbildung der Erfindung erweitern sich die Mitnehmer in Förderrichtung im Wesentlichen V-förmig, und zwar besonders bevorzugt mit einem Öffnungswinkel zwischen 60° und 80°. Eine solche Gestaltung ist ihrerseits günstig im Hinblick auf einen minimalen Schlupf üblicher salzhaltiger Streustoffe wie auch ein hohes Maß an Gleichförmigkeit der von dem Förderband auf die Ausbringeinheit abgeworfenen Streustoffmenge.

Weiterhin ist für die exakte Dosierbarkeit des Streustoffes und die Konstanz der abgeworfenen Streustoffmenge von Vorteil, wenn die Mitnehmer endseitig in sich im Wesentlichen in Förderrichtung erstreckenden Vorsprüngen auslaufen und/oder zueinander benachbarte Mitnehmer einander - insbesondere im Bereich der besagten Vorsprünge - in Förderrichtung überlappen. Frontseitig sind solche Vorsprünge besonders bevorzugt vergleichsweise flach ausgeführt, indem sie frontseitig mit dem Bandkörper einen Winkel zwischen 130° und 170° einschließen. Zur Mitte des Förderbandes hin schließen solche Vorsprünge mit dem Bandkörper besonders bevorzugt einen Winkel zwischen 110° und 140° ein, zur Seite des Förderbandes hin indessen besonders bevorzugt einen Winkel zwischen 90° und 110°. Dies trägt dem Umstand Rechnung, dass die Vorsprünge aufgrund ihrer Orientierung im Wesentlichen in Längsrichtung des Förderbandes grundlegend anderen Belastungen ausgesetzt sind als die Mitnehmer in ihren übrigen Bereichen.

Gemäß einer wiederum anderen bevorzugten Weiterbildung der Erfindung weisen die Mitnehmer eine abgeflachte Oberseite auf, die sich insbesondere zwischen der frontseitigen Flanke und einer rückwärtigen Flanke erstreckt. Günstig ist dabei, wenn die abgeflachte Oberseite in Längsrichtung des Förderbandes eine gegenüber der Höhe der Mitnehmer größere Erstreckung aufweist. Dies ist von Vorteil im Hinblick auf eine Minimierung eines möglichen Schlupfes.

Aufgrund der erfindungsgemäßen Ausführung des Förderbandes ist, wie dargelegt, die Gefahr, dass salzhaltiger Streustoff dauerhaft an dem Förderband anhaftende Ablagerungen bildet, maßgeblich reduziert, so dass insoweit Fehldosierungen vermieden werden. Dessen ungeachtet kann das Streugerät - gemäß einer abermals anderen bevorzugten Weiterbildung der Erfindung - eine das Förderband reinigende Reinigungseinrichtung aufweisen, welche insbesondere eine rotierende Bürste umfassen kann. Wird das Förderband in diesem Sinne - insbesondere im Bereich des Abwurfs des Streustoffs auf die Ausbringeinheit - mittels einer Reinigungseinrichtung gereinigt, lassen sich optimale Voraussetzungen für eine exakte Dosierung des Streustoffes durch das umlaufende Förderband und dessen Mitnehmer - im Zusammenwirken mit einem Dosierschieber - erreichen.

Im Folgenden wird die vorliegende Erfindung anhand in der Zeichnung veranschaulichter Ausführungsbeispiele näher erläutert. Dabei zeigt
- Fig. 1: in Draufsicht von oben ein Streugerät nach dem Stand der Technik,
- Fig. 2: in perspektivischer Ansicht das Förderband eines ersten Ausführungsbeispiels eines nach der Erfindung ausgeführten Streugeräts,
- Fig. 3: das in Fig. 2 gezeigte Förderband in Draufsicht,
- Fig. 4: einen Schnitt durch einen der Mitnehmer des Förderbands nach den Figuren 2 und 3 entlang der Linie A-A,
- Fig. 5: einen Schnitt durch einen der Mitnehmer des Förderbands nach den Figuren 2 und 3 entlang der Linie B-B,
- Fig. 6: einen Schnitt durch einen der Mitnehmer des Förderbands nach den Figuren 2 und 3 entlang der Linie C-C und
- Fig. 7: einen der Fig. 2 entsprechenden Schnitt durch den Mitnehmer eines Förderbandes eines zweiten Ausführungsbeispiels eines nach der Erfindung ausgeführten Streugeräts.

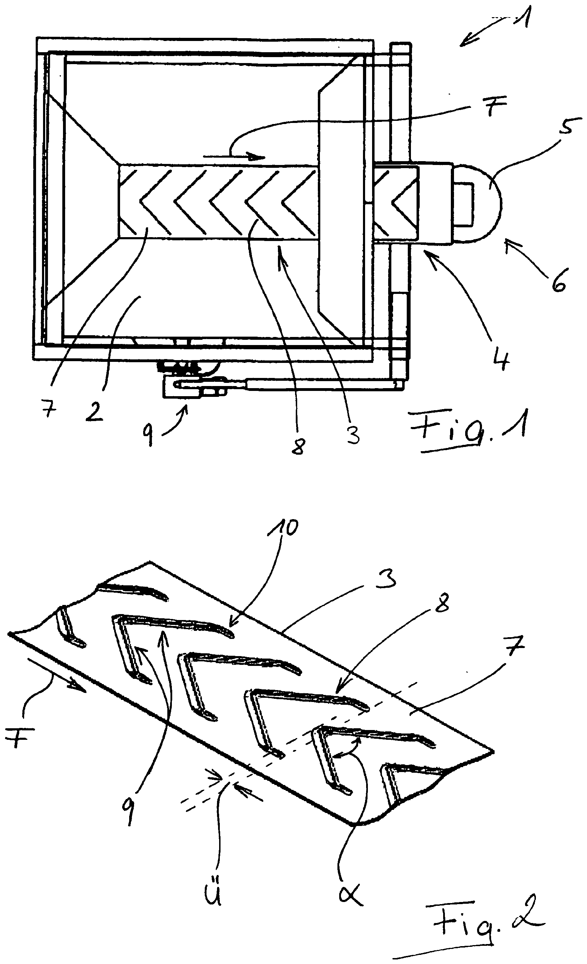

Das in Fig. 1 gezeigte, dem Ausbringen von salzhaltigem Streustoff auf Verkehrsflächen dienende, zum Einsatz auf einem Trägerfahrzeug bestimmte Winterdienst-Streugerät 1 entspricht hinsichtlich seines grundsätzlichen Aufbaus dem hinlänglich bekannten Stand der Technik (vgl. DE 29907419 U1, auf die vollumfänglich verwiesen wird). Es umfasst in als solches bekannter Weise einen Streustoffvorratsbehälter 2 mit einer bodenseitig angeordneten, ein umlaufendes Förderband 3 umfassenden Fördereinrichtung 4, mittels derer Streustoff einer heckseitig an dem Streugerät 1 angeordneten, einen Streuteller 5 umfassenden Ausbringeinheit 6 zuführbar ist. Das Förderband 3 ist dabei mittels eines (nicht gezeigten) Motors antreibbar (Förderrichtung F). Es umfasst einen flachen Bandkörper 7, auf dessen nach Außen weisender Oberfläche Mitnehmer 8 angeordnet sind, die rippenförmig von dem Bandkörper 7 vorspringen.

Bei dem Ausführungsbeispiel nach Fig. 1 wird die zum Antrieb von Streuteller 5 und Förderband 3 erforderliche Leistung durch einen Radnabenantrieb 9 bereitgestellt (vgl. DE 29907419 U1), was für die vorliegende Erfindung allerdings erkennbar keinerlei Bedeutung hat, weil es bei dieser auf die Art des Antriebs für das Förderband 3 ersichtlich nicht ankommt.

Details eines Förderbandes 3, wie es gemäß einem ersten bevorzugten Ausführungsbeispiel bei einem erfindungsgemäß ausgeführten Streugerät eingesetzt werden kann, sind in den Fig. 2 bis 6 veranschaulicht. Die Mitnehmer 8 erweitern sich in Förderrichtung F im Wesentlichen V-förmig öffnend, wobei der Öffnungswinkel α zwischen den beiden Schenkeln 9 in Förderrichtung F etwa 70° beträgt. Die Mitnehmer 8 laufen endseitig in sich im Wesentlichen in Förderrichtung F erstreckenden Vorsprüngen 10 aus. Die gezeigte spezifische Gestaltung und Anordnung der Mitnehmer resultiert in einer gewissen Überlappung Ü jeweils zueinander benachbarter Mitnehmer 8 in Förderrichtung F.

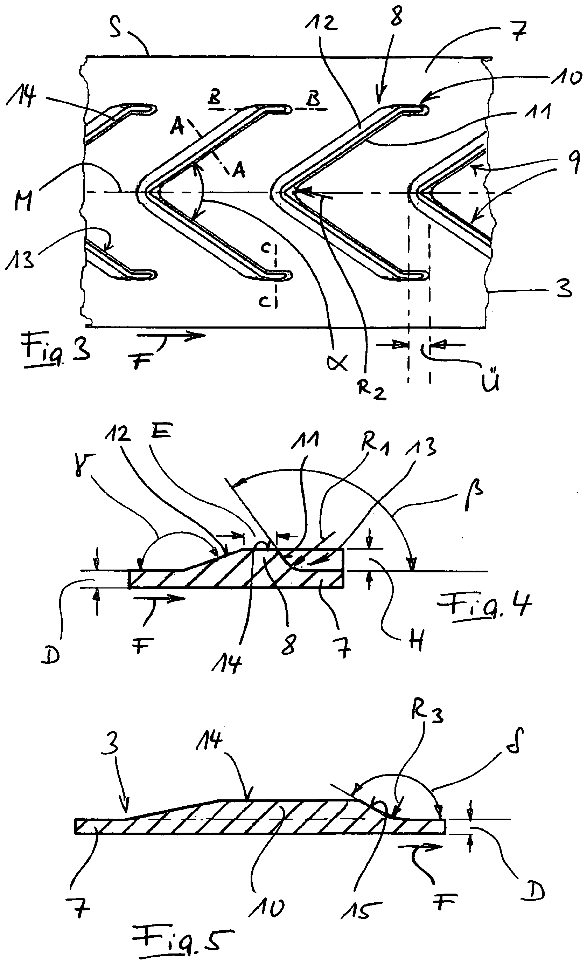

Die beiden Schenkel 9 eines jedes Mitnehmers 8 weisen, wie in Fig. 4 im Detail gezeigt, einen im Wesentlichen trapezförmigen Querschnitt auf. Der Querschnitt ist dabei in verschiedener Hinsicht asymmetrisch. So schließt eine (in Förderrichtung F) frontseitige Flanke 11 mit dem Bandkörper 7 einen Winkel β von etwa 125° ein, eine (in Förderrichtung) rückwärtige Flanke 12 indessen einen Winkel γ von etwa 160°. Weiterhin ist im Bereich des frontseitigen Übergangs 13 vom Bandkörper 7 zum Mitnehmer 8 ein ausgeprägter Übergangsradius R₁ vorgesehen. Dieser beträgt bei einer etwa 5mm betragenden Höhe H des Mitnehmers etwa 2mm.

Die beiden Schenkel 9 der Mitnehmer 8 gehen an dem Fuß der Übergangsradien R₁ mit einem Radius R₂ von etwa 10mm ineinander über. Der Bandkörper 7 selbst weist eine Dicke D von etwa 5-6mm auf. Die Mitnehmer 8 weisen eine abgeflachte Oberseite 14 auf. Deren Erstreckung E ist bereits im Querschnitt (Fig. 4) mit etwa 7,5mm deutlich größer als die Höhe H der Mitnehmer 8. Erst recht weist die abgeflachte Oberseite 14 der Mitnehmer in der Projektion in Förderrichtung F eine gegenüber der Höhe H der Mitnehmer 8 größere Erstreckung auf.

Die Vorsprünge 10 der Mitnehmer 8 schließen frontseitig, d.h. im Bereich von frontseitigen Stirnflächen 15 mit dem Bandkörper einen Winkel δ von etwa 150° ein. Auch im Bereich des Übergangs vom Bandkörper 7 zu den frontseitigen Stirnflächen 15 der Vorsprünge 10 ist jeweils ein 2mm betragender Übergangsradius R₃ vorgesehen.

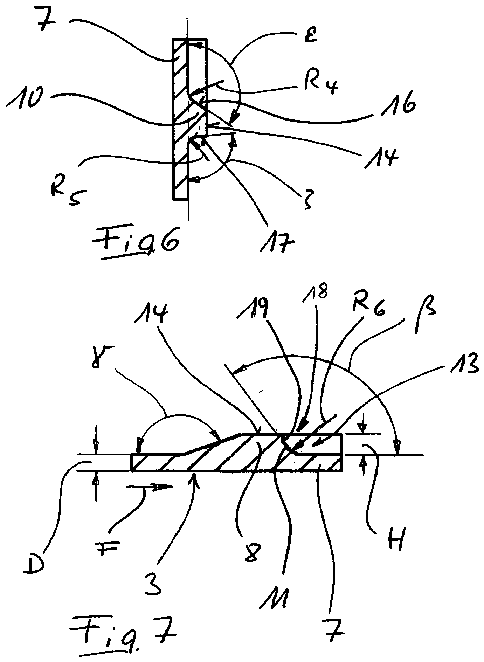

Auch die Vorsprünge 10 der Mitnehmer 8 weisen einen asymmetrischen trapezförmigen Querschnitt auf (vgl. Fig. 6). So schließen zur Mitte M des Förderbandes 3 hin die Flanken 16 der Vorsprünge 10 mit dem Bandkörper 7 einen Winkel ε von wiederum etwa 125° ein, wohingegen zur Seite S des Förderbandes 3 hin die Flanken 17 der Vorsprünge 10 mit dem Bandkörper 7 einen Winkel ζ von etwa 95° einschließen. Sowohl am Übergang vom Bandkörper 7 zu den zur Mitte M des Förderbandes 3 hin weisenden Flanken 16 der Vorsprünge 10 als auch am Übergang vom Bandkörper 7 zu den zur Seite S des Förderbandes 3 hin weisenden Flanken 17 der Vorsprünge 10 sind mit 2mm bemessene Übergangsradien R₄ und R₅ ausgeführt.

Gemäß der in Fig. 7 veranschaulichten zweiten bevorzugten Ausführungsform der Mitnehmer 8 kann an deren Schenkeln 9 jeweils im Bereich des Übergangs 18 der frontseitigen Flanke 11 zur abgeflachten Oberseite 14 ein zu letzterer senkrechter Streifen 19 von beispielsweise etwa 1mm Höhe verlaufen. Die frontseitige Flanke 11 der Schenkel 9 der Mitnehmer 8 lässt sich demgemäß in drei Bereiche unterteilen, nämlich den Übergangsradius R6 von etwa 2mm, den gegenüber dem Bandkörper um etwa 125° (β) geneigten Bereich der Flanke und den im Wesentlichen zum Bandkörper sowie der abgeflachten Oberseite 14 der Mitnehmer senkrechten Streifen 19.

## Patentansprüche

1. Winterdienst-Streugerät (1) zum Ausbringen von salzhaltigem Streustoff auf Verkehrsflächen, umfassend einen Streustoffvorratsbehälter (2) mit mindestens einer bodenseitig angeordneten, ein umlaufendes Förderband (3) umfassenden Fördereinrichtung (4), mittels derer Streustoff einer Ausbringeinheit (6) zuführbar ist, wobei das Förderband (3) an seiner nach Außen weisenden Oberfläche mit Mitnehmern (8), welche von dem flachen Bandkörper (7) rippenförmig vorspringen, bestückt ist, wobei sich die Mitnehmer (8) in Förderrichtung (F) öffnen, **dadurch gekennzeichnet, dass** die Mitnehmer (8) jeweils zumindest auf einem überwiegenden Anteil ihrer Erstreckung im Bereich des Übergangs (13) zum Bandkörper (7) mit einem Übergangsradius (R₁) ausgeführt sind, wobei ferner die Frontseite der Mitnehmer (8) anschließend an den Übergangsradius (R₁) mit dem Bandkörper (7) einen Winkel (β) zwischen 110° und 140° einschließt, wobei weiterhin der Übergangsradius (R₁) maximal 50% der Höhe (H) des betreffenden Mitnehmers (8) beträgt, und wobei weiterhin die Mitnehmer (8) rückwärtig mit dem Bandkörper (7) einen Winkel (γ) zwischen 150° und 170° einschließen.

2. Winterdienst-Streugerät nach Anspruch 1, **dadurch gekennzeichnet, dass** der Bereich des Übergangs (13) vom Bandkörper (7) zur frontseitigen Flanke (11) der Mitnehmer (8) mit einem Radius (R₁) von mindestens 10% der Höhe (H) der Mitnehmer (8) ausgeführt ist.

3. Winterdienst-Streugerät nach Anspruch 1 oder Anspruch 2, **dadurch gekennzeichnet, dass** der Bereich des Übergangs (13) vom Bandkörper (7) zur frontseitigen Flanke (11) der Mitnehmer (8) mit einem Radius (R₁) von zwischen 1,0 und 3,0mm ausgeführt ist.

4. Winterdienst-Streugerät nach einem der Ansprüche 1 bis 3, **dadurch gekennzeichnet, dass** die Mitnehmer (8) sich in Förderrichtung (F), bevorzugt V-förmig, öffnend erweitern.

5. Winterdienst-Streugerät nach Anspruch 4, **dadurch gekennzeichnet, dass** bei sich V-förmig erweiternden Mitnehmern (8) deren Öffnungswinkel (α) in Förderrichtung (F) zwischen 60° und 80° beträgt.

6. Winterdienst-Streugerät nach Anspruch 4 oder Anspruch 5, **dadurch gekennzeichnet, dass** bei sich V-förmig erweiternden Mitnehmern (8) deren beide Schenkel (9) jeweils an ihrem Fuß mit einem Radius (R₂) zwischen 8 und 12mm ineinander übergehen.

7. Winterdienst-Streugerät nach einem der Ansprüche 1 bis 6, **dadurch gekennzeichnet, dass** bei sich V-förmig erweiternden Mitnehmern (8) diese endseitig in sich im Wesentlichen in Förderrichtung (F) erstreckenden Vorsprüngen (10) auslaufen.

8. Winterdienst-Streugerät nach Anspruch 7, **dadurch gekennzeichnet, dass** die Vorsprünge (10) frontseitig mit dem Bandkörper (7) einen Winkel (δ) zwischen 130° und 170° einschließen.

9. Winterdienst-Streugerät nach Anspruch 7 oder Anspruch 8, **dadurch gekennzeichnet, dass** die Vorsprünge (10) zur Mitte (M) des Förderbandes (3) hin mit dem Bandkörper (7) einen Winkel (ε) zwischen 110° und 140° einschließen.

10. Winterdienst-Streugerät nach einem der Ansprüche 7 bis 9, **dadurch gekennzeichnet, dass** die Vorsprünge (10) zur Seite (S) des Förderbandes (3) hin mit dem Bandkörper (7) einen Winkel (ζ) zwischen 90° und 110° einschließen.

11. Winterdienst-Streugerät nach einem der Ansprüche 1 bis 10, **dadurch gekennzeichnet, dass** zueinander benachbarte Mitnehmer (8) einander in Förderrichtung (F) überlappen.

12. Winterdienst-Streugerät nach einem der Ansprüche 1 bis 11, **dadurch gekennzeichnet, dass** die Mitnehmer (8) eine abgeflachte Oberseite (14) aufweisen.

13. Winterdienst-Streugerät nach Anspruch 12, **dadurch gekennzeichnet, dass** die abgeflachte Oberseite (14) eine gegenüber der Höhe (H) der Mitnehmer (8) größere Erstreckung (E) aufweist.

14. Winterdienst-Streugerät nach einem der Ansprüche 1 bis 13, **dadurch gekennzeichnet, dass** eine das Förderband (3) reinigende Reinigungseinrichtung vorgesehen ist.

15. Winterdienst-Streugerät nach Anspruch 14, **dadurch gekennzeichnet, dass** die Reinigungseinrichtung eine rotierende Bürste umfasst.

## Claims

1. A gritting apparatus (1) for winter service for discharging salt-containing grit onto traffic areas, comprising a grit storage container (2) having at least one conveyor system (4) arranged on the bottom side and comprising a continuously revolving conveyor belt (3), by means of which conveyor system the grit can be fed to a discharging unit (6), wherein the conveyor belt (3) is provided on its outwardly facing surface with carriers (8) which protrude from the flat belt body (7) in a rib-shaped manner, wherein the carriers (8) open in the conveying direction (F), **characterized in that** the carriers (8), at least on a predominant portion of the extent thereof, are each designed such that they have a transition radius (R₁) in the region of the transition (13) to the belt body (7), wherein, furthermore, the front side of the carriers (8), which adjoins the transition radius (R₁), encloses with the belt body (7) an angle (β) of between 110° and 140°, wherein, furthermore, the transition radius (R₁) is a maximum of 50% of the height (H) of the respective carrier (8), and wherein, furthermore, the carriers (8), on the rear side thereof, enclose with the belt body (7) an angle (γ) of between 150° and 170°.

2. The gritting apparatus for winter service according to claim (1), **characterized in that** the region of the transition (13) from the belt body (7) to the front flank (11) of the carriers (8) is designed such that it has a radius (R₁) of at least 10% of the height (H) of the carriers (8).

3. The gritting apparatus for winter service according to claim 1 or claim 2, **characterized in that** the region of the transition (13) from the belt body (7) to the front flank (11) of the carriers (8) is designed such that it has a radius (R₁) of between 1.00 and 3.00 mm.

4. The gritting apparatus for winter service according to any of claims 1 to 3, **characterized in that** the carriers (8) widen in the conveying direction (F) in a preferably V-shaped manner.

5. The gritting apparatus for winter service according to claim 4, **characterized in that** with the carriers (8) widening in a V-shaped manner, the opening angle (α) thereof in the conveying direction (F) is between 60° and 80°.

6. The gritting apparatus for winter service according to claim 4 or claim 5, **characterized in that** with the carriers (8) widening in a V-shaped manner, their two legs (9) merge into each other, in each case at their respective base, with a radius (R₂) of between 8 and 12 mm.

7. The gritting apparatus for winter service according to any one of claims 1 to 6, **characterized in that** with the carriers (8) widening in a v-shaped manner, the ends sides thereof end in projections (10) which extend substantially in the conveying direction (F).

8. The gritting apparatus for winter service according to claim 7, **characterized in that** the front sides of projections (10) enclose with the belt body (7) an angle (δ) of between 130° and 170°.

9. The gritting apparatus for winter service according to claim 7 or claim 8, **characterized in that** towards the middle (M) of the conveyor belt (3), the projections (10) enclose with the belt body (7) an angle (ε) of between 110° and 140°

10. The gritting apparatus for winter service according to any one of claims 7 to 9, **characterized in that** towards the side (S) of the conveyor belt (3), the projections (10) enclose with the belt body (7) an angle (ζ) of between 90° and 110°.

11. The gritting apparatus for winter service according to any one of claims 1 to 10, **characterized in that** carriers (8) adjacent to one another overlap one another in the conveying direction (F).

12. The gritting apparatus for winter service according to any one of claims 1 to 11, **characterized in that** the carriers (8) have a flattened upper surface (14).

13. The gritting apparatus for winter service according to claim 12, **characterized in that** the flattened upper surface (14) has an extent (E) that is greater with respect to the height (H) of the carriers (8).

14. The gritting apparatus for winter service according to any one of claims 1 to 13, **characterized in that** a cleaning unit cleaning the conveyor belt (3) is provided.

15. The gritting apparatus according to claim 14, **characterized in that** the cleaning unit comprises a rotating brush.

## Revendications

1. Appareil d'épandage (1) pour service hivernal, destiné à appliquer un produit d'épandage contenant du sel sur des surfaces de circulation, comprenant un conteneur de réserve (2) de produit d'épandage, avec au moins un système de convoyage (4) disposé du côté du fond inférieur, comprenant une bande transporteuse (3) en rotation, à l'aide de laquelle du produit d'épandage peut être amené vers une unité distributrice (6), sur sa surface dirigée vers l'extérieur, la bande transporteuse (3) étant équipée d'entraîneurs (8) lesquels saillissent en forme de nervures à partir du corps de bande (7) plat, les entraîneurs (8) s'ouvrant dans la direction de convoyage (F), **caractérisé en ce qu'**au moins sur une majeure partie de leur extension, dans la région du passage (13) vers le corps de bande (7), les entraîneurs (8) sont réalisés chacun avec un rayon de passage (R₁), par ailleurs la face frontale des entraîneurs (8) en raccordement sur le rayon de passage (R₁) incluant avec le corps de bande (7) un angle (β) compris entre 110° et 140°, en outre, le rayon de passage (R₁) s'élevant au maximum à 50 % de la hauteur (H) de l'entraîneur (8) concerné et en outre, les entraîneurs (8) incluant à l'arrière avec le corps de bande (7) un angle (γ) compris entre 150° et 170°.

2. Appareil d'épandage pour service hivernal selon la revendication 1, **caractérisé en ce que** la région du passage (13) du corps de bande (7) vers le flanc (11) frontal des entraîneurs (8) est réalisée avec un rayon (R₁) d'au moins 10 % de la hauteur (H) des entraîneurs (8).

3. Appareil d'épandage pour service hivernal selon la revendication 1 ou la revendication 2, **caractérisé en ce que** la région du passage (13) du corps de bande (7) vers le flanc (11) frontal des entraîneurs (8) est réalisée avec un rayon (R₁) compris entre 1,0 et 3,0 mm.

4. Appareil d'épandage pour service hivernal selon l'une quelconque des revendications 1 à 3, **caractérisé en ce que** les entraîneurs (8) s'évasent en s'ouvrant, de préférence en forme de V dans la direction de convoyage (F).

5. Appareil d'épandage pour service hivernal selon la revendication 4, **caractérisé en ce que** si les entraîneurs (8) s'évasent en forme de V, leur angle d'ouverture (α) dans la direction de convoyage (F) s'élève à de 60° à 80°.

6. Appareil d'épandage pour service hivernal selon la revendication 4 ou la revendication 5, **caractérisé en ce que** si les entraîneurs (8) s'évasent en forme de V, leurs deux branches (9), respectivement sur leur base, passent l'une dans l'autre avec un rayon (R₂) compris entre 8 et 12 mm.

7. Appareil d'épandage pour service hivernal selon l'une quelconque des revendications 1 à 6, **caractérisé en ce que** si les entraîneurs (8) s'évasent en forme de V, ils se terminent côté extrémité dans des saillies (10) s'étendant sensiblement dans la direction de convoyage (F).

8. Appareil d'épandage pour service hivernal selon la revendication 7, **caractérisé en ce que** les saillies (10) incluent du côté frontal avec le corps de bande (7) un angle (δ) compris entre 130° et 170°.

9. Appareil d'épandage pour service hivernal selon la revendication 7 ou la revendication 8, **caractérisé en ce qu'**en direction du centre (M) de la bande transporteuse (3), les saillies (10) incluent avec le corps de bande (7) un angle (ε) compris entre 110° et 140°.

10. Appareil d'épandage pour service hivernal selon l'une quelconque des revendications 7 à 9, **caractérisé en ce qu'**en direction du côté (S) de la bande transporteuse (3), les saillies (10) incluent avec le corps de bande (7) un angle (ζ) compris entre 90° et 110°.

11. Appareil d'épandage pour service hivernal selon l'une quelconque des revendications 1 à 10, **caractérisé en ce que** des entraîneurs (8) mutuellement voisins se chevauchent réciproquement dans la direction de transport (F).

12. Appareil d'épandage pour service hivernal selon l'une quelconque des revendications 1 à 11, **caractérisé en ce que** les entraîneurs (8) comportent une face supérieure (14) aplatie.

13. Appareil d'épandage pour service hivernal selon la revendication 12, **caractérisé en ce que** la face supérieure (14) aplatie présente une extension (E) plus grande, par rapport à la hauteur (H) des entraîneurs (8).

14. Appareil d'épandage pour service hivernal selon l'une quelconque des revendications 1 à 13, **caractérisé en ce qu'**il est prévu un système de nettoyage nettoyant la bande transporteuse (3).

15. Appareil d'épandage pour service hivernal selon la revendication 14, **caractérisé en ce que** le système de nettoyage comprend une brosse rotative.
